# EUROPEAN PATENT APPLICATION

(11) **EP 4 351 203 A1**
(43) Date of publication of application: **10.04.2024**
(21) Application number: 23201900.0
(22) Date of filing: 05.10.2023
(51) Int. Cl.: H04W 24/02, G06N 3/08

(54) **USER EQUIPMENT AND BASE STATION OPERATING BASED ON COMMUNICATION MODEL, AND OPERATING METHOD THEREOF**

(30) Priority: 07.10.2022 KR 20220129034; 27.01.2023 KR 20230011221
(71) Applicant: Samsung Electronics Co., Ltd., Suwon-si, Gyeonggi-do 16677 (KR)
(72) Inventor: JUNG, Youngseok, 16677 Suwon-si (KR)
(74) Representative: Marks & Clerk LLP

(57) **Abstract**

The devices, systems, and techniques described herein provide for efficient integration of machine learning techniques into wireless communication system frameworks. User equipment (100) may perform communication with base stations (200) based on communication models generated through machine learning. Data may be collected from various communication environments to optimize communication models (e.g., to train communication models, provide inputs to communication models, etc.). According to embodiments of the present disclosure, user equipment (100) may update parameters (e.g., parameters for controlling wireless communication systems) to provide the user equipment with various data (e.g., data subsequent to modifying parameters of the wireless communication system) for enabling effective training and implementation of communication models that are implemented based on machine learning. Accordingly, user equipment (100) may efficiently manage communication models based on various data, and user equipment (100) may thus perform communication operations within wireless communication systems with improved performance (e.g., based on the generated and updated optimal communication models).

## Description

### BACKGROUND

The inventive concept relates to a user equipment and a base station operating based on a communication model, and an operating method thereof.

Wireless communication systems are widely deployed for providing various telecommunication services such as telephony, video, data, messaging, broadcasts and so on. Some wireless communication systems employ multiple-access technologies capable of supporting communication with multiple users by sharing available system resources (for example, bandwidth, transmit power and so on). Examples of such multiple-access technologies include code division multiple access (CDMA) systems, time division multiple access (TDMA) systems and the like. Additionally, the systems can conform to specifications such as third generation partnership project (3GPP), 3GPP long term evolution (LTE), etc.

A wireless communication system may include a number of devices (e.g., terminals, network devices, and other devices) exchanging data, control information, reference signals, etc. (e.g., communicating) with each other. In some examples, devices operating in a wireless communication system may employ various technologies to improve throughput or achieve a high data rate. These technologies may allow a wireless communication system to support communication between an increasing number of devices, support advanced functionalities at various devices, improve the quality of communication between devices, etc. Examples of technologies employed to improve throughput may include beamforming, massive multiple-input multiple-output (MIMO), full-dimensional MIMO (FD-MIMO), antenna arrays, analog beamforming, large-scale antenna technologies, etc.

Machine Learning (ML) is a subfield of artificial intelligence that involves the development of algorithms that allow computers to learn from and make decisions or predictions based on data. In some cases, certain machine learning techniques may improve efficiency and reliability of wireless communication systems. Accordingly, there is a need in the art for systems and techniques that efficiently integrate machine learning into wireless communication system frameworks.

### SUMMARY

The inventive concept provides a user equipment that requests a base station to change a value of a parameter and an operation method thereof so that the user equipment may collect data for training a communication model in various communication environments.

In addition, the inventive concept provides a base station that changes a value of a parameter in response to a request to change the value of the parameter from a user equipment and an operation method thereof.

According to an aspect of the inventive concept, there is provided a method of wireless communication (e.g., a method of a user equipment performing a communication with a base station), the method including receiving system information and scheduling information from the base station, receiving a first downlink signal from the base station based at least in part on (e.g., in a first communication environment corresponding to) the system information and the scheduling information. The method includes managing a communication model based on a machine learning operation using data included in the first downlink signal, and transmitting, to the base station, a change request for changing a value of a target parameter, from among a first plurality of parameters corresponding to at least one of: the system information and the scheduling information, based on the managing of the communication model (e.g. based on a management result).

According to an aspect of the inventive concept, there is provided a method of wireless communication (e.g., a method for a base station performing communication with a user equipment), the method including transmitting system information and scheduling information to the user equipment and transmitting a first downlink signal to the user equipment in a first communication environment corresponding to the system information and the scheduling information. The method includes receiving a change request for changing a value of a target parameter from among a first plurality of parameters corresponding to at least one of: the system information and the scheduling information, and changing the value of the target parameter in response to the received change request.

In addition, according to an aspect of the inventive concept, there is provided a user equipment including a transceiver configured to receive a first downlink signal from a base station in a first communication environment, and a controller configured to manage a communication model based on the first downlink signal, determine a target parameter (e.g., as a candidate for a change of a value) from among a plurality of parameters related to the first communication environment based on the management of the communication model (e.g. based on a management result), and transmit, to the base station through the transceiver, a change request for changing a value of the target parameter.

In addition, according to an aspect of the inventive concept, there is provided a method of wireless communication, the method including: managing a communication model using first data corresponding to a first communication environment configured via a first downlink signal; determining, based on managing the communication model using the first data, a target parameter corresponding to a desired second communication environment for collecting second data; transmitting a change request indicating at least the target parameter and a desired change value corresponding to the target parameter; receiving the second data corresponding to the second desired communication environment configured via a second downlink signal, wherein the second downlink signal comprises the first downlink signal changed based on the target parameter having the desired change value; and updating the communication model based on the second data.

At least some of the above and other features of the invention are set out in the claims.

### BRIEF DESCRIPTION OF THE DRAWINGS

Embodiments of the inventive concept will be more clearly understood from the following detailed description taken in conjunction with the accompanying drawings in which:
FIG. 1 is a block diagram illustrating a wireless communication system according to an embodiment;
FIG. 2 is a block diagram illustrating a user equipment according to an embodiment;
FIG. 3 is a block diagram illustrating a base station according to an embodiment;
FIG. 4 is a flowchart illustrating an operation method of a wireless communication system according to an embodiment;
FIGS. 5A to 5C are flowcharts for describing detailed embodiments of operations S150 and S160 of FIG. 4;
FIG. 6A is a block diagram illustrating a model management circuit according to an embodiment, and FIG. 6B is a diagram illustrating an operation of the model management circuit of FIG. 6A;
FIGS. 7 and 8 are table diagrams illustrating an embodiment for determining a target parameter according to embodiments;
FIG. 9 is a flowchart illustrating an operation method of a wireless communication system according to an embodiment;
FIGS. 10 and 11 are flowcharts illustrating detailed embodiments of operation S300 of FIG. 9;
FIG. 12 is a flowchart illustrating an operation method of a wireless communication system according to an embodiment;
FIGS. 13A and 13B are table diagrams for explaining capability information of a base station indicating parameters that a base station may change in response to a request from a user equipment according to embodiments;
FIG. 14 is a table diagram for explaining an embodiment of a user equipment that determines a change request condition for a specific parameter type according to an embodiment;
FIG. 15 is a flowchart illustrating an operation method of a user equipment associated with FIG. 14;
FIGS. 16A to 16C are flowcharts illustrating an operation method of a wireless communication system according to embodiments; and
FIG. 17 is a conceptual diagram illustrating an loT network system to which embodiments of the inventive concept are applied.

### DETAILED DESCRIPTION OF THE EMBODIMENTS

A wireless communication system may generally include or refer to a number of devices employing techniques for exchanging information wirelessly. For example, a wireless communication system may include terminals (e.g., user devices or user equipment) and base stations (or network entities) that wirelessly communicate data, control information, reference signals, etc. (e.g., according to various wireless communication system implementations).

To meet the demand for wireless data traffic having increased since deployment of 4th generation (4G) communication systems, efforts have been made to develop an improved 5th generation (5G) or pre-5G communication system. Therefore, the 5G or pre-5G communication system may also be called a `beyond 4G network' or a `post long term evolution (LTE) system'. The 5G communication system may be considered to be implemented in higher frequency (e.g., millimeter wave (mmW)) bands, such as 60 GHz bands, so as to accomplish higher data rates.

Techniques including, for example, beamforming, massive multiple-input multiple-output (mMIMO), full dimensional-MIMO (FD-MIMO), array antenna, and analog beam forming may be implemented in 5G communication systems to decrease propagation loss of radio waves and increase transmission distances. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

Accordingly, wireless communication systems may configure, enable, and manage various technologies to support efficient exchange of information. For instance, in order to perform wireless communication with a user equipment, a base station may determine values of one or more parameters for controlling various aspects of the wireless communication environment. That is, wireless communication systems may establish parameters that configure/manage various communication aspects, such as physical layer aspects (e.g., frequency band, modulation, etc.), mobility management aspects, beam management aspects, power performance/power consumption aspects, etc.). In certain aspects, wireless communication systems may establish such parameters (e.g., a base station may convey such parameters to user equipment) via system messaging such as system information, scheduling information, etc. In some aspects, the values of some parameters (e.g., wireless communication parameters for controlling the environment of device to device (D2D) communication between user equipments) may be determined by the base station (e.g., or transmission user equipment that transmit data).

According to the techniques and systems described herein, wireless communication systems may integrate machine learning techniques into their frameworks for improved efficiency and reliability of wireless communication. For instance, according to the present disclosure, wireless communication systems can implement machine learning-based communication models, which may enable wireless communication systems to better interpret present environments, learn from previous transmission experiences, predict potential interference or signal degradation, adjust strategies for optimal communication, etc. Accordingly, aspects described herein may result in enhanced network performance, reduced wireless communication latency, reduced energy consumption by wireless communication devices, more robust signal transmission in diverse environmental conditions, etc.).

For instance, user equipment can perform communication with base stations based on communication models generated through machine learning. In some aspects, (e.g., after user equipment are deployed in a live wireless communication system), the user equipment may communicate with base stations to continuously update the communication model (e.g., based on the data received from the network/base stations). Various data may be collected from various communication environments to optimize the communication model (e.g., to train the communication model, to provide inputs to the communication model, etc.).

As described herein, to optimize communication performance in a wireless communication system, a communication model using machine learning can be trained on, and implemented on, both a base station side and a user equipment side. Since the values of some parameters (e.g., parameters for controlling wireless communication system environments) are determined by the network/base station (e.g., or by a transmitting user equipment in D2D communication), techniques described herein may be implemented to provide user equipment with various data for enabling effective training and implementation of communication models based on (e.g., generated through) machine learning.

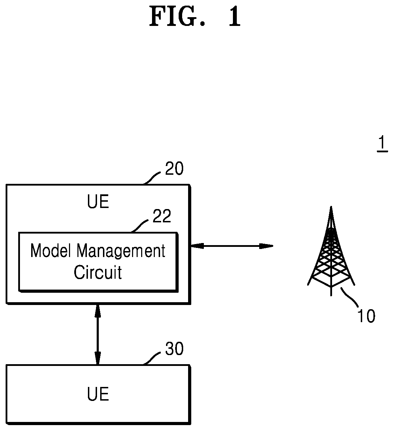

FIG. 1 is a block diagram illustrating a wireless communication system 1 according to an embodiment. Specifically, FIG. 1 illustrates an example of a new radio (NR) (e.g., 5G) system as an example of a wireless communication system 1. The inventive concept is applicable to various communication systems having similar or other technical backgrounds and channel shapes (for example, a cellular communication system, such as Long Term Evolution (LTE), LTE-Advanced (LTE-A), New Radio (NR), Wireless Broadband (WiBro), and Global System for Mobile Communication (GSM), a short-range communication system, such as Bluetooth and Near Field Communication (NFC), or Device to Device (D2D) communication, as a slight modification in a range without departing from the scope of the present disclosure, and this will be possible at the judgment of a person with the skilled technical knowledge in the technical field of the present disclosure.

Moreover, various features described below may be implemented or supported by one or more computer programs, each of which consists of computer readable program code and is embodied in a computer readable medium. The terms "application" and "program" refer to one or more computer programs, software components, instruction sets, procedures, functions, objects, classes, instances, related data, or parts of them suitable for implementation of a suitable computer-readable program code. The term "computer-readable program code" includes all types of computer code, including source code, object code, and execution code. The term "computer-readable media" includes any type of media that may be accessed by a computer, such as read only memory (ROM), random access memory (RAM), hard disk drives, compact discs (CDs), digital video discs (DVDs), or any other type of memory. A "non-transitory" computer readable medium excludes wired, wireless, optical, or other communication links that transmit transitory electrical or other signals. A non-transitory computer readable medium includes media where data can be permanently stored and media where data can be stored and later overwritten, such as a rewritable optical disc or an erasable memory device.

Referring to FIG. 1, a wireless communication system 1 may include a base station 10, user equipment 20, and user equipment 30. The base station 10 may generally refer to any network entity, such as a fixed station in communication with the user equipment 20 (e.g., and/or other base stations). Base station 10 may exchange control information and data by communicating with the user equipment 20 (e.g., and/or the other base stations). For example, the base station 10 may be referred to as a node B, evolved-node B (eNB), next generation node B (gNB), sector, site, base transceiver system (BTS), access point (AP), relay node, remote radio head (RRH), radio unit (RU), small cell, device, or the like.

The user equipment 20 may be fixed or mobile and may refer to any devices capable of communicating with the base station 10 to transmit and receive data and/or control information. For example, the user equipment 20 may be referred to as a terminal, terminal equipment, a mobile station (MS), a mobile terminal (MT), a user terminal (UT), a subscribe station (SS), a wireless communication device, a wireless device, a device, a handheld device, or the like.

In some aspects, user equipment 20 can be described based on an embodiment of communicating with the base station 10 based on a communication model generated through machine learning. In some aspects, the communication model is a model generated through machine learning and can be referred to as a machine learning model. In some aspects, communication model may include, or refer to, transmission and reception algorithms that include, or are generated through, machine learning techniques. It will be fully understood that embodiments described below may be applied to the base station 10 and the other user equipment 30. In addition, embodiments of the inventive concept are described on the basis of an example applied to communication between the base station 10 and the user equipment 20, but may also be applied to D2D communication between the user equipment 20 and the other user equipment 30 (e.g., where aspects described as being performed by base station 10 may be performed by a transmitting user equipment 20 in D2D, and aspects described as being performed by user equipment 20 may be performed by a receiving user equipment 30 in D2D).

As described herein, a user equipment 20 performs communication with base stations 10 based on communication models generated through machine learning. In some aspects, (e.g., after user equipment 20 is deployed in a live wireless communication system 1), the user equipment 20 communicates with the base station 10 to continuously update the model management circuit 22 based on received data. Due to aspects of machine learning, various data may be collected from various communication environments to optimize the communication model (e.g., a communication model managed by model management circuit 22). However, some communication environments are controlled by base stations 10, making it difficult for user equipments 20 to collect various data. As such, techniques described herein increase the amount of optimization of the communication model of the user equipment 20.

For instance, a user equipment 20 may actively request, from a base station 10, a change in the value of a parameter (e.g., to collect various data in various communication environments in managing the communication model). The user equipment 20 may transmit, to the base station 10, a request to change the value of the parameter, and the base station 10 may accept or deny (e.g., not accept) the change request in response to the change request (e.g., as described in more detail herein). In addition, the base station 10 may provide, to the user equipment 20, capability information of the base station 10 indicating whether the base station 10 may support a feature of changing a value of a parameter in response to a change request of the user equipment 20 (e.g., as described in more detail herein).

The base station 10 may transmit system information to the user equipment 20 for communication with the user equipment 20. The base station 10 may determine the values of one or more parameters related to system information, generate system information representing the values of the plurality of parameters, and transmit the generated system information to the user equipment 20. In some aspects, the system information may include common information used by one or more user equipments, including a user equipment 20, to operate properly in the network. That is, the base station 10 may provide system information commonly applied to the plurality of user equipments (including the user equipment 20) for accessing the network of the base station 10. In an embodiment, the system information may be included in at least one of a master information block (MIB) and a system information block (SIB) to be transmitted to the user equipment 20.

The base station 10 may transmit scheduling information to the user equipment 20 for communication with the user equipment 20. The base station 10 may determine the values of one or more parameters related to scheduling information, generate system information representing the values of the plurality of parameters, and transmit the generated scheduling information to the user equipment 20. In some aspects, the scheduling information may include information that is individually implemented for the user equipment 20 (or some groups including the user equipment 20) to operate properly in the network. That is, the base station 10 may provide scheduling information applied individually to the user equipment 20 (or some groups including the user equipment 20) for accessing the network of the base station 10. In an embodiment, the scheduling information may include at least one piece of downlink control information (DCI) and information used in radio resource control (RRC) connected state. In some aspects, information used for an RRC connected state may be referred to as RRC information.

In an embodiment, the user equipment 20 receives scheduling information based on system information and receives a first downlink signal based on the scheduling information. The user equipment 20 may include a model management circuit 22, and the model management circuit 22 may manage the communication model by using data included in the first downlink signal. In some aspects, the management of the communication model may include at least one of an operation of generating a communication model during the mass production stage of the user equipment 20 and an operation of updating the communication model generated after the user equipment 20 is shipped (e.g., after the user equipment 20 is deployed in an operation wireless communication system 1). In some aspects, the management of the communication model may include training the communication model, implementing a learning policy, optimizing the communication model, updating the communication model, etc. In addition, the model management circuit 22 may be implemented as hardware logic, software logic, or hardware/software mixed logic, and the operation of the model management circuit 22 may be understood as the operation of the user equipment 20. In FIG. 1, the model management circuit 22 is shown to be included in the user equipment 20, but the present disclosure is not limited thereto (e.g., the model management circuit 22 may be implemented to be included in an over the top (OTT) server connected to the user equipment 20, etc.). Embodiments of the present disclosure may be applied to collect both on-line data processed by the model management circuit 22 in an implementation in which the model management circuit 22 is included in the user equipment 20, and off-line data processed by the model management circuit 22 in an implementation in which the model management circuit 22 is included in the OTT server or the like.

In an embodiment, the model management circuit 22 may determine at least one target parameter, from among one or more parameters related to at least one of system information and scheduling information, on the basis of a management result in a process of managing a communication model by using data included in a first downlink signal received from the base station 10. The user equipment 20 (e.g., the model management circuit 22) can request the base station 10 to change the value of the at least one target parameter. In some aspects, the target parameter may be defined as a parameter for requesting a change in a value from the user equipment 20 to the base station 10. In an embodiment, the model management circuit 22 may confirm that collection of data included in a downlink signal received from the base station 10 in a particular communication environment is desired/requested in managing the communication model. For example, the model management circuit 22 may determine one or more target parameters and/or a desired change value for one or more target parameters that enable collection of new data in a particular communication environment is desired/requested in managing the communication model (e.g., new data in a particular communication environment that results in feedback that is positive for a learning policy, that enables optimization of the communication model, etc., as described in more detail herein). The user equipment 20 (e.g., the model management circuit 22) can transmit, to the base station 10, a request to change a value of at least one target parameter for controlling the change from the current communication environment to the particular communication environment. In an embodiment, the request for changing the value of the target parameter may be included in the logical uplink control information so that any one of a plurality of downlink Dedicated Control Channels (DCCH) formats may be applied. In some embodiments, a new format distinguished from the existing downlink DCCH control information may also be applied to a request to change the value of the target parameter.

In an embodiment, the base station 10 may accept a change request (e.g., a change request to change the value of at least one target parameter) or the base station 10 may reject the change request. When accepting the change request, the base station 10 may transmit changed system information or changed scheduling information to the user equipment 100 by changing the value of at least one target parameter. The user equipment 100 may receive, from the base station 10, a second downlink signal according to the changed communication environment based on the changed system information or the changed scheduling information. The model management circuit 22 may manage the communication model using data included in the second downlink signal. In some embodiments, the base station 10 may determine (e.g., distinguish, discriminate, identify, etc.) whether it is easy to change the value of at least one target parameter in the current communication environment. In some embodiments, the base station 10 may deny (e.g., not accept, disregard, ignore, delay, etc.) the change request from the user equipment 20 (e.g., when it is difficult to change the value of the at least one target parameter).

The user equipment 20, according to embodiments of the present disclosure, can actively request the base station 10 to change the value of the target parameter so that data (e.g., new/additional data) to optimally manage the communication model may be collected. As a result, communication performance of the user equipment 20 operating based on the optimized communication model may be improved.

In addition, the base station 10 according to an embodiment of the present disclosure may support effective management of the communication model of the user equipment 20 by accepting a change request to change the value of the target parameter in response to the request to change the value of the target parameter.

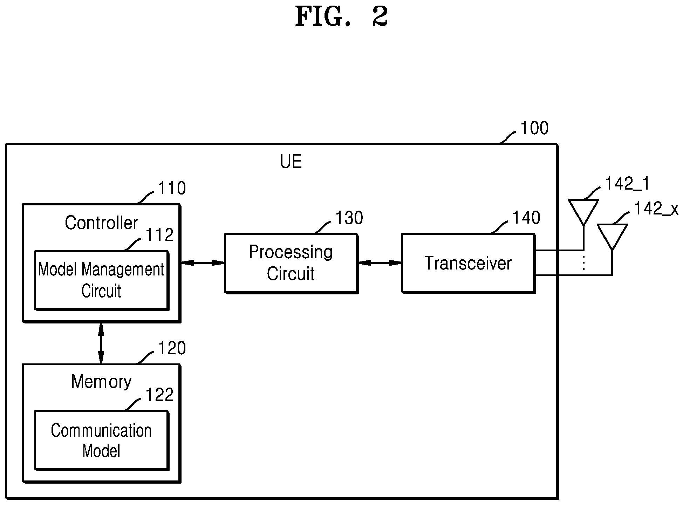

FIG. 2 is a block diagram illustrating user equipment 100 according to an embodiment. Referring to FIG. 2, the user equipment 100 may include a controller 110, a memory 120, a processing circuit 130, a transceiver 140, and one or more antennas 142_1 through 142_x (e.g., the user equipment 100 may include a single antenna 142_1, or a number of x > 1 antennas).

The transceiver 140 may receive a radio frequency (RF) signal transmitted by the base station through the antennas 142_1 to 142_x. The transceiver 140 may down-convert the received RF signal to generate an intermediate frequency or a baseband signal. The processing circuit 130 may process (e.g., generate) data by filtering, decoding and/or digitizing the intermediate frequency or baseband signal. The controller 110 may additionally process data.

In addition, the processing circuit 130 may receive data from the controller 110. The processing circuit 130 may encode, multiplex, and/or analogize the received data. The transceiver 140 may process (e.g., frequency-up-convert) the intermediate frequency or baseband signal outputs from the processing circuit 130 and transmit the frequency-up-converted signals to the base station through the antennas 142_1 to 142_x as an RF signal.

A processing circuit 130 may include an intelligent hardware device, (e.g., a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof). In some cases, the processing circuit 130 is configured to operate a memory array using a memory controller. In other cases, a memory controller is integrated into the processing circuit 130. In some cases, the processing circuit 130 is configured to execute computer-readable instructions stored in a memory to perform various functions. In some embodiments, a processing circuit 130 includes special purpose components for modem processing, baseband processing, digital signal processing, or transmission processing.

In an embodiment, the controller 110 may execute a communication model 122 stored in the memory 120 to perform control for the user equipment 100 for communication with the base station or some features of the processing circuit 130. In an embodiment, the controller 110 may include a model management circuit 112 that manages the communication model 122. In some embodiments, the model management circuit 112 may be stored in the memory 120 in the form of a program code executed to perform management operations in accordance with embodiments of the present disclosure, and the controller 110 may access the memory 120 and execute the stored program code, thereby performing operations of the model management circuit 112.

Examples of memory 120 include random access memory (RAM), read-only memory (ROM), or a hard disk. Examples of memory 120 include solid state memory and a hard disk drive. In some examples, memory 120 is used to store computer-readable, computer-executable software including instructions that, when executed, cause a processor to perform various functions described herein. In some cases, the memory 120 contains, among other things, a basic input/output system (BIOS) which controls basic hardware or software operation such as the interaction with peripheral components or devices. In some cases, a memory controller operates memory cells. For example, the memory controller can include a row decoder, column decoder, or both. In some cases, memory cells within a memory 120 store information in the form of a logical state.

In an embodiment, the model management circuit 112 may manage (e.g., send or receive instructions, etc.) the communication model 122 based on data received from the processing circuit 130, determine target parameters (e.g., from among a plurality of first parameters) based on management results, generate requests for changing the value of target parameters, etc. (e.g., as described in more detail herein). For example, a request to change the value of a target parameter may be transmitted to the base station through the transceiver 140 and the antennas 142_1 to 142_x. The plurality of first parameters may be related to at least one of system information and scheduling information received from the base station. In some embodiments, parameters may relate to (e.g., configure aspects of) at least one of a physical layer, mobility management, beam management, low-power performance, and the like, in communication between the base station and the user equipment 100. Such parameters are described for illustrative purposes and are not intended to limit the scope of the present disclosure. However, parameters applicable using the techniques and systems described herein are not limited thereto, as other parameters that relate to various elements for controlling a communication environment between the base station and the user equipment 100 may be implemented by analogy, without departing from the scope of the present disclosure.

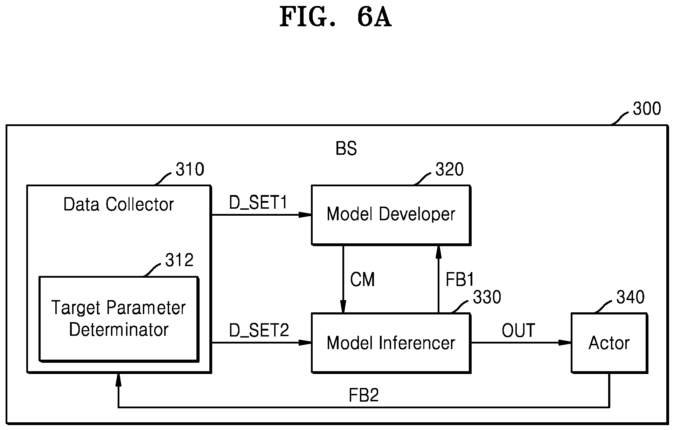

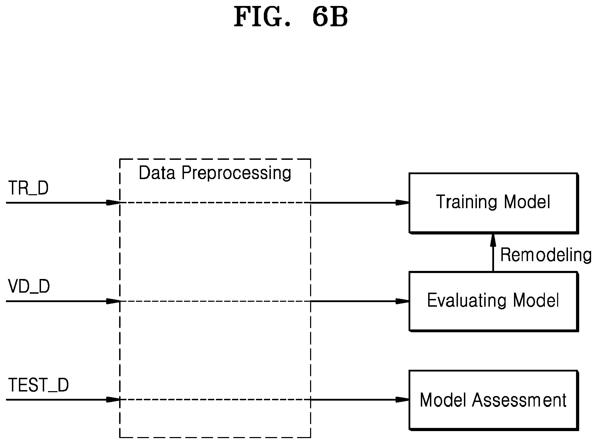

In an embodiment, user equipment 100 (e.g., the model management circuit 112) may manage a communication model 122 using first data corresponding to a first communication environment configured via a first downlink signal. Model management circuit 112 may determine, based on model management circuit 112 managing the communication model using the first data, a target parameter corresponding to a desired second communication environment for collecting second data (e.g., as described in more detail herein, for example, with reference to at least FIGs. 6A and 6B). User equipment 100 (e.g., transceiver 140) can transmit a change request indicating at least the target parameter and a desired change value corresponding to the target parameter. User equipment 100 (e.g., transceiver 140) may receive the second data corresponding to the second desired communication environment configured via a second downlink signal, wherein the second downlink signal comprises the first downlink signal changed based on the target parameter having the desired change value. User equipment 100 (e.g., the model management circuit 112) may update the communication model 122 based on the second data (e.g., as described in more detail herein, for example, with reference to at least FIGs. 6A and 6B).

In some cases, UE 100 may include a neural processing unit (NPU) is a microprocessor that specializes in the acceleration of machine learning algorithms. For example, an NPU may operate on predictive models such as artificial neural networks (ANNs) or random forests (RFs). In some cases, an NPU is designed in a way that makes it unsuitable for general purpose computing such as that performed by a Central Processing Unit (CPU). Additionally or alternatively, the software support for an NPU may not be developed for general purpose computing.

In some cases, one or more parameters may include parameters that are explicitly indicated as configurable by the base station (e.g., based on which parameters the base station supports modification of by the user equipment 100). For example, in an embodiment, the first parameters may correspond to the second parameters that may be changed in the base station in response to the change request of the user equipment 100. Specifically, the base station may provide, to the user equipment 100, capability information of the base station indicating the second parameters, and the model management circuit 112 may determine the target parameter from among the second parameters by referring to the capability information of the base station.

In an embodiment, the model management circuit 112 may transmit, to the base station, an indication of a value (e.g., a new or updated value) of a target parameter. For instance, the model management circuit 112 may transmit a desired value for change in the value of the target parameter along with a request for a change in the value of the target parameter. In some embodiments, the base station may directly determine a change value of a suitable target parameter in the current communication environment in response to a request to change the value of the target parameter. In some aspects, the value of the target parameter may itself be the request for the base station to change the value of the target parameter (e.g., the user equipment 100 indication of the desired value may inherently include the request to change the value of the target parameter). Alternatively, a request to change the value of the target parameter may be data separate from the data indicating the desired value for change in the value of the target parameter.

In an embodiment, the model management circuit 112 may wait for a response to a request to change the value of a target parameter of the base station based on an established (e.g., pre-promised, preconfigured, etc.) signaling method with the base station and may perform an operation consistent with the response result.

In an embodiment, the controller 110 may manage capability information of the user equipment 100 indicating whether the user equipment 100 may support a feature of requesting a change in the value of the parameter. The controller 110 may transmit capability information of the user equipment 100 to the base station using the transceiver 140 and the antennas 142_1 to 142_x. The base station may prepare a request to change a value of a target parameter to be received from the user equipment 100 based on the capability information of the user equipment 100.

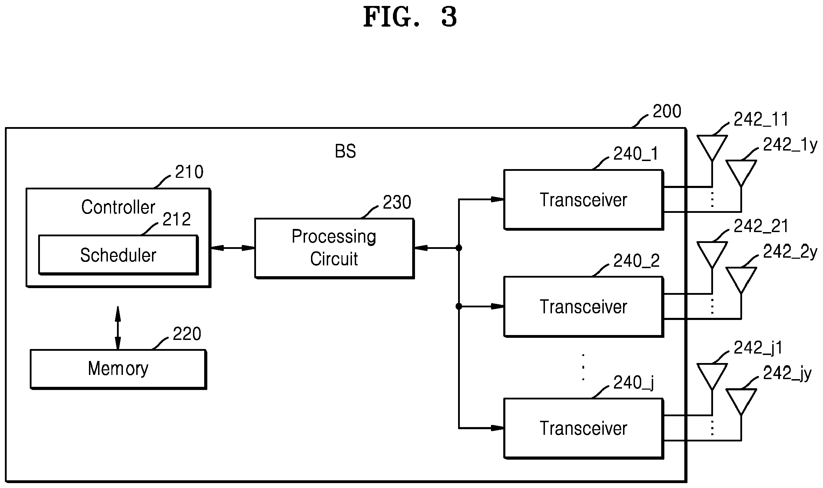

FIG. 3 is a block diagram illustrating a base station 200 according to an embodiment. Referring to FIG. 3, the base station 200 may include a controller210, a memory 220, a processing circuit 230, one or more transceivers 240_1 to 240_j, and one or more antennas 242_11 to 242_1y, 242_21 to 242_2y, ..., and 242_j1 to 242_jy. The transceivers 240_1 to 240_j may receive RF signals transmitted from user equipment using antennas 242_11 to 242_1y, 242_21 to 242_2y, ..., and 242J1 to 242_jy. The transceivers 240_1 to 240_j may frequency-down-convert the received RF signal to generate an intermediate frequency or a baseband signal. The processing circuit 230 may generate data by filtering, decoding and/or digitizing the intermediate frequency or baseband signal. The controller 210 may additionally process data.

The processing circuit 230 may receive data from the controller 210. The processing circuit 230 may encode, multiplex, and/or analogize the received data. The transceivers 240_1 to 240_j may process (e.g., frequency-up-convert) the intermediate frequency or baseband signal outputs from the processing circuit 230 and transmit the frequency-up-converted signals to the user equipment through the antennas 242_11 to 242_1y, 242_21 to 242_jy, ..., and 242_j1 to 242_jy as RF signals.

In an embodiment, the controller 210 may generally control the base station 200 for communication with the user equipment, and may include a scheduler 212 for scheduling time-frequency resources. In some configurations, the scheduler 212 may be stored in the memory 220 in the form of a program code executed to perform an operation of changing the value of the target parameter corresponding to embodiments of the present disclosure, and the controller 210 may access the memory 220 to execute the stored program code, thereby performing operations of the scheduler 212.

In an embodiment, the scheduler 212 may change the value of the target parameter by accepting a request to change the value of the target parameter received from the user equipment based on the current communication environment and the target parameter. The scheduler 212 may perform scheduling based on the target parameters with changed values, generate changed system information or changed scheduling information, and transmit the generated changed system information or the generated changed scheduling information to the user equipment through the transceivers 240_1-240J and the antennas 242_11 to 242_1y, 242_21 to 242_2y, ..., and 242J1 to 242Jy. In an embodiment, the scheduler212 may not accept (e.g., deny, disregard, etc.) a request to change a value of a target parameter based on a current communication environment and a target parameter.

In an embodiment, the scheduler 212 may respond to the user equipment with an acceptance result or a rejection result (e.g., non-acceptance result) for a request to change the value of a target parameter based on an established (e.g., pre-promised, preconfigured, etc.) signaling method, and the user equipment may check the response to recognize whether the value of the target parameter has changed (e.g., based on the response).

In an embodiment, the controller 210 may manage (e.g., receive, interpret, etc.) capability information of the base station 200 indicating whether a feature of changing a value of a target parameter according to a request of the user equipment is supportable. In some configurations, the capability information of the base station 200 may further include information indicating second parameters that may be changed in the base station 200 in response to a request from the user equipment. For example, in some cases, the user equipment may request whether communication parameters may be changed (e.g., whether some first set of parameters may be changed), and the base station 200 may indicate a second set of parameters that the base station 200 supports the changing of (e.g., where the second parameters may include all of the first parameters, a subset of the first parameters, or alternate parameters different from the first parameters). The controller 210 may transmit the capability information of the base station 200 to the user equipment through the transceivers 240_1 to 240_j and the antennas 242_11 to 242_1y, 242_21 to 242_2y, ..., and 242_j1 to 242_jy. The user equipment may generate a request for changing the value of the target parameter on the basis of the capability information of the base station 200 (e.g., where the target parameter may be one of the second parameters indicated by the base station 200), and the user equipment may transmit the request to the base station 200.

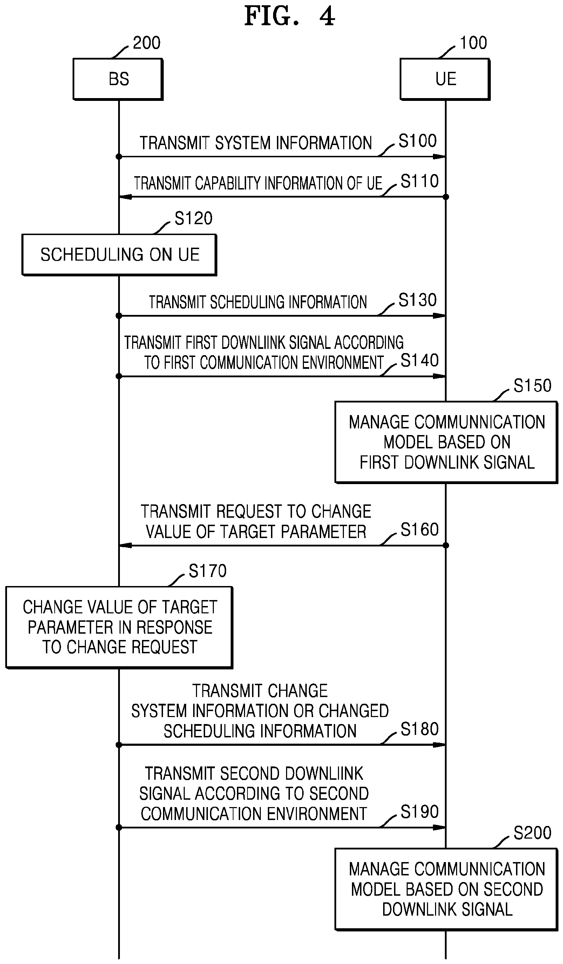

FIG. 4 is a flowchart illustrating an operation method of a wireless communication system according to an embodiment. The wireless communication system may include a user equipment 100 and a base station 200.

Referring to FIG. 4, in operation S100, the base station 200 may transmit system information to the user equipment 100. The system information may include information that the user equipment 100 needs to know to access the base station 200. Specifically, the base station 200 may determine parameters and their values commonly demanded/requested for one or more user equipments within the coverage of the base station 200 to access the base station 200, and generate system information based on the determination result. In an embodiment, the system information may be broadcast in predetermined frequency regions within the coverage of the base station 200. In an embodiment, the system information may be included in at least one piece of the master information block (MIB) and the system information block (SIB) and transmitted to the user equipment 100.

In operation S110, the user equipment 100 may transmit capability information of the user equipment to the base station 200. The user equipment 100 may inform the base station 200 of its capability when a connection with the base station 200 is established. The user equipment 100 may selectively support only some of the features described in the standard specification of the user equipment, and may transmit, to the base station 200, the capability information of the user equipment 100 indicating the supportable features. In an embodiment, the capability information of the user equipment 100 may indicate whether a feature for requesting a change of a value of a target parameter is supportable. In addition, the capability information of the user equipment 100 may indicate whether the feature of determining the desired change value for the target parameter is supported (or is supportable). The base station 200 may prepare for a request to change the value of the target parameter from the user equipment 100 based on the capability information of the user equipment 100.

In operation S120, the base station 200 may perform scheduling on the user equipment 100. The base station 200 may determine parameters and their values for communication with the user equipment 100 through scheduling and generate scheduling information based on the determination result. In some embodiments, the scheduling information may include at least one piece of downlink control information and information used for implementing a wireless resource control connection (RRC) state.

In operation S130, the base station 200 may transmit scheduling information to the user equipment 100.

In operation S140, the base station 200 may transmit, to the user equipment 100, a first downlink signal according to a first communication environment corresponding to system information and scheduling information.

In operation S150, the user equipment 100 may receive a first downlink signal based on system information and scheduling information, and may manage a communication model based on the first downlink signal. The user equipment 100 may determine a target parameter from among the first parameters related to at least one piece of the system information and the scheduling information on the basis of the management result. That is, the user equipment 100 may desire to receive a second downlink signal according to a second communication environment in order to effectively manage the communication model, and for this purpose, may determine a target parameter for changing from the first communication environment to the second communication environment.

In operation S160, the user equipment 100 may transmit a request for changing the value of the target parameter.

In operation S170, the base station 200 may change the value of the target parameter in response to the change request. In an embodiment, the base station 200 may change the value of the target parameter to a desired change value received from the user equipment 100. In some configurations, the base station 200 may determine an appropriate change value in the first communication environment, and may change the value of the target parameter to the determined change value.

In operation S180, the base station 200 may transmit changed system information or changed scheduling information due to a change in the value of the target parameter.

In operation S190, the base station 200 may transmit, to the user equipment 100, a second downlink signal according to the controlled second communication environment through a change in the value of the target parameter.

In operation S200, the user equipment 100 may receive the second downlink signal based on the changed system information or the changed scheduling information, and may manage the communication model based on the second downlink signal.

It should be noted that the example of FIG. 4 is shown for illustrative purposes and is not intended to be limiting in terms of the scope of the present disclosure (e.g., in the example of FIG. 4, the sequence of the operations is not limited thereto, some operations may be omitted, and some operations may be added).

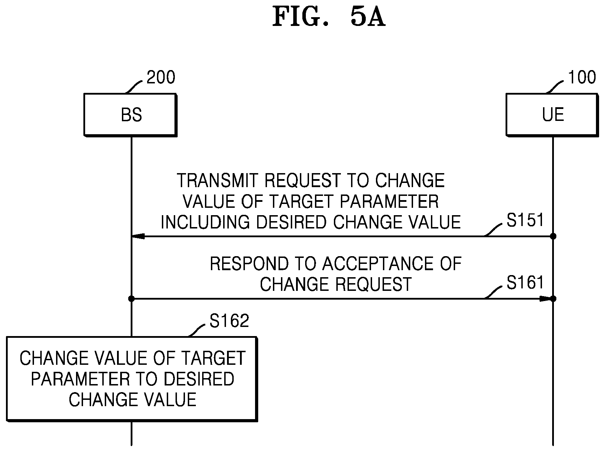

FIGS. 5A to 5C are flowcharts for describing detailed embodiments of operations described herein (e.g., such as operations S150 and S160 of FIG. 4).

Referring to FIG. 5A, in operation S151, the user equipment 100 may transmit, to the base station 200, a request to change the value of the target parameter including the desired change value.

In operation S161, the base station 200 may respond to the user equipment 100 to accept the change request. In some embodiments, operation S161 may be omitted.

In operation S162, the base station 200 may change the value of the target parameter to a change value desired by the user equipment 100.

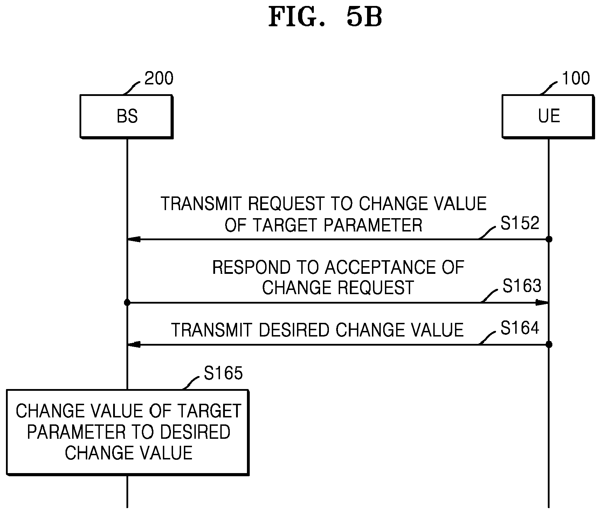

Referring further to FIG. 5B, in operation S152, the user equipment 100 may transmit, to the base station 200, a request to change a value of a target parameter.

In operation S163, the base station 200 may respond to the user equipment 100 to accept the change request. In some embodiments, operation S163 may be omitted.

In operation S164, the user equipment 100 may transmit a desired change value to the base station 200 based on the acceptance response of the change request.

In operation S165, the base station 200 may change the value of the target parameter to a change value desired by the user equipment 100.

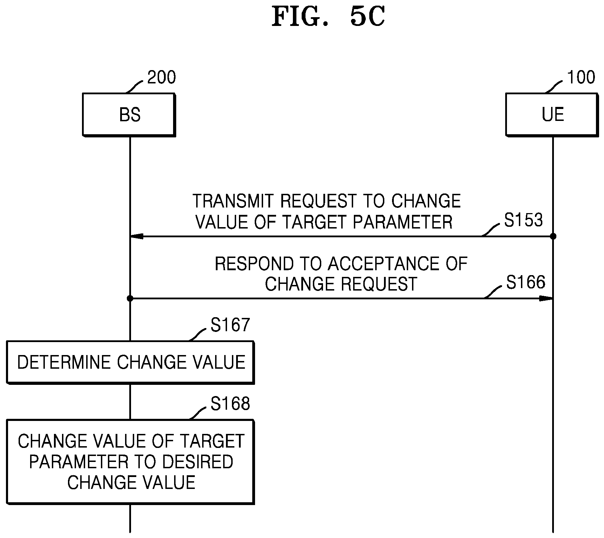

Referring further to FIG. 5C, in operation S153, the user equipment 100 may transmit, to the base station 200, a request to change a value of a target parameter.

In operation S166, the base station 200 may respond to the user equipment 100 to accept the change request. In some embodiments, operation S166 may be omitted.

In operation S167, the base station 200 may determine a change value related to the target parameter based on the first communication environment. Specifically, the base station 200 may determine a change value for the target parameter as a value that allows the impact on other user equipment communicating with the base station 200 in the first communication environment to be less than a threshold. In some embodiments, the base station 200 may obtain information on the communication model of the user equipment 100 in advance and determine the change value for the target parameter as a value to allow the user equipment 100 to collect data for managing the communication model based on the information on the communication model.

Meanwhile, the user equipment 100 may separately transmit, to the base station 200, feedback on the change value determined by the base station 200, and the base station 200 may use the feedback received to determine the change value when receiving a change request for the same target parameter again in the future.

FIG. 6A is a block diagram illustrating a model management circuit 300 according to an embodiment, and FIG. 6B is a diagram illustrating an operation of the model management circuit 300 of FIG. 6A.

An artificial neural network (ANN) is a hardware or a software component that includes a number of connected nodes (i.e., artificial neurons), which loosely correspond to the neurons in a human brain. Each connection, or edge, transmits a signal from one node to another (like the physical synapses in a brain). When a node receives a signal, it processes the signal and then transmits the processed signal to other connected nodes. In some cases, the signals between nodes comprise real numbers, and the output of each node is computed by a function of the sum of its inputs. In some examples, nodes may determine their output using other mathematical algorithms (e.g., selecting the max from the inputs as the output) or any other suitable algorithm for activating the node. Each node and edge is associated with one or more node weights that determine how the signal is processed and transmitted.

During the training process, these weights are adjusted to improve the accuracy of the result (i.e., by minimizing a loss function which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse certain layers multiple times.

A loss function refers to a function that impacts how a machine learning model is trained in a supervised learning model. Specifically, during each training iteration, the output of the model is compared to the known annotation information in the training data. The loss function provides a value (a "loss") for how close the predicted annotation data is to the actual annotation data. After computing the loss, the parameters of the model are updated accordingly and a new set of predictions are made during the next iteration.

Referring to FIG. 6A, the model management circuit 300 may include a data collector 310, a model developer 320, a model inferencer 330, and an actor 340.

The data collector 310 may provide a first data set D_SET1 to the model developer 320 and may provide a second data set D_SET2 to the model inferencer 330. The model developer 320 may repeatedly perform learning and validation operations using data included in the first data set D_SET1 to generate or update a communication model. The model developer 320 may distribute the generated or updated communication model CM to the model inferencer 330. The model inferencer 330 may evaluate the performance of the distributed communication model CM based on the data included in the second data set D_SET2 to generate and provide a first feedback FB1 on the performance of the communication model to the model developer 320. In addition, the model inferencer 330 may provide the evaluation result to the actor 340 as an output OUT, and the actor 340 may apply the output OUT to a learning policy to generate a second feedback FB2 on the output OUT, and provide the second feedback FB2 to the data collector 310.

In an embodiment, the data collector 310 may include a target parameter determiner 312. The target parameter determiner 312 may determine a target parameter from among a plurality of parameters based on the second feedback FB2. Furthermore, the target parameter determiner 312 may determine a desired change value for the target parameter. That is, the target parameter determiner 312 may determine the target parameter so that the actor 340 may collect training data from the base station to receive the second feedback FB2 that is positive for the learning policy. For instance, in some aspects, model management circuit 300 may implement machine learning paradigms including training, learning, etc. For example, a learning policy may be implemented such that software agents described herein make decisions in order to encourage feedback that is positive for the learning policy (e.g., to maximize a reward). The decision making model may be referred to as a policy.

Referring further to FIG. 6B, the model developer 320 may repeatedly perform operations (e.g., three operations) of learning a communication model using training data TR_D, remodeling the communication model after evaluating the learned communication model using verification data VD_D, and determining the final communication model using test data TEST_D. The model developer 320 may perform data processing on training data TR_D, verification data VD_D, and test data TEST_D based on at least one of various learning algorithms to determine the final communication model.

The model management circuit 300 according to an embodiment may collect enough various training data TR_D, verification data VD_D, and test data TEST_D from the base station in various communication environments desired by the user equipment by actively transmitting a request to change the value of the target parameter to the base station. As a result, the model developer 320 may generate and update an optimal communication model based on various data and perform a communication operation with improved performance based on the generated and updated optimal communication model.

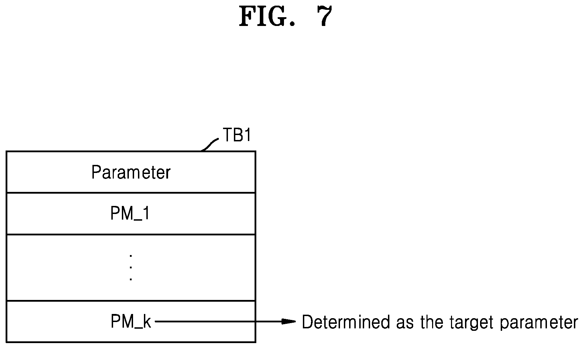

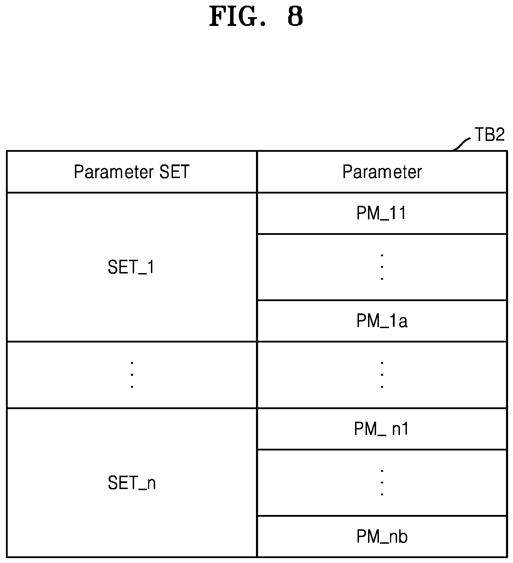

FIGS. 7 and 8 are table diagrams illustrating an embodiment related to determination of a target parameter according to embodiments.

Referring to FIG. 7, the user equipment may determine, as a target parameter, at least one of parameters PM_1 to PM_k capable of requesting a change in the user equipment based on a first table TB1. In an embodiment, parameters PM_1 to PM_k that may be requested to change in the user equipment may be preset from among the plurality of parameters that control the communication environment between the user equipment and the base station. In some embodiments, parameters PM_1 to PM_k capable of requesting a change between the base station and the user equipment may be configured (e.g., promised) in advance. In some embodiments, parameters PM_1 to PM_k capable of requesting a change between the base station and the user equipment may be indicated to the user equipment from a base station. The parameters PM_1 to PM_k may be determined through various criteria, and for example, the parameter having a small impact on other user equipment within the same coverage of the base station as the corresponding user equipment due to a change of the value of the parameter may be included in the parameters PM_1 to PM_k of the first table TB1.

The user equipment may recognize preset parameters PM_1 to PM_k by referring to the first table TB1, and may determine at least one of the parameters PM_1 to PM_k of the first table TB1 as a target parameter.

Referring further to FIG. 8, the user equipment may generate a request for changing a value of a target parameter based on the second table TB2. In an embodiment, among a number of parameters that control the communication environment between the user equipment and the base station, parameters PM_11 to PM_1a, ..., and PM_n1 to PM_nb that may be requested to change in the user equipment may be classified as parameter sets SET_1, ..., and SET_n and set in advance.

The user equipment may recognize parameters PM_11 to PM_1a, ..., and PM_n1 to PM_nb or parameter sets SET_1,..., SET_n preset with reference to the second table TB2.

In an embodiment, the user equipment refers to the second table TB2 and may transmit, to the base station, a change request for any one of parameter sets SET_1, ..., and SET_n, and the base station may change the value of at least one of the parameters of the parameter set requested to be changed. In this case, the format of the change request may include a field indicating a parameter set.

In an embodiment, the user equipment refers to the second table TB2 and may transmit, to the base station, a change request for a target parameter included in any one of the parameter sets SET_1, ..., and SET_n, and the base station may change the value of the target parameter requested to be changed. In this case, the format of the change request may include a field indicating a parameter set and a field indicating a parameter included in the parameter set.

In addition, in an embodiment, the user equipment may divide a change request for the target parameter into a parameter set unit and transmit, to the base station, the change request divided into the parameter set unit. For example, the user equipment may transmit, to the base station, a change request of the value of at least one of the parameters PM_11 to PM_1a included in the first parameter set SET_1 in a first section, and may transmit, to the base station, a change request of the value of at least one of the parameters PM_n1 to PM_nb included in the n-th parameter set SET_n in a n-th section.

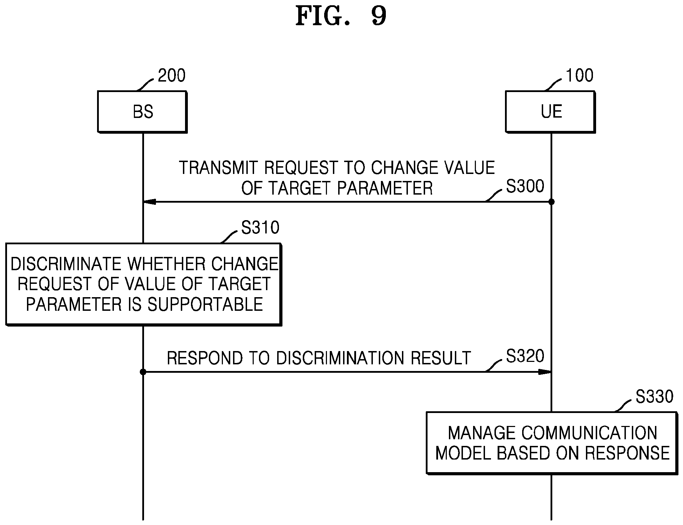

FIG. 9 is a flowchart illustrating an operation method of a wireless communication system according to an embodiment. The wireless communication system may include a user equipment 100 and a base station 200.

Referring to FIG. 9, in operation S300, the user equipment 100 may transmit, to the base station 200, a request to change a value of a target parameter.

In operation S310, the base station 200 may determine (e.g., distinguish, discriminate, etc.) whether a request for changing a value of a target parameter is acceptable. In an embodiment, the base station 200 may predict whether the impact on other user equipment within the coverage of the base station 200 when the value of the target parameter is changed in the current communication environment is below the threshold, and determine whether a request to change the value of the target parameter is acceptable based on the prediction result. As one example, base station 200 may predict whether other user equipment (within the coverage of the base station 200) will experience degraded signal quality, increased latency, or other adverse impacts when the value of the target parameter is changed, and if the degree to which other user equipments are adversely impacted is below some threshold, the base station 200 may determine that the request to change the value of the target parameter is acceptable. In some embodiments, the base station 200 may compare the target parameter requested to change the value with the parameters that may be changed in the base station 200 at the request of the user equipment 100 and thus determine whether the request to change the value of the target parameter is acceptable based on the comparison result. That is, when the target parameter is a parameter capable of supporting the change, the base station 200 may accept the change request.

In operation S320, the base station 200 may respond to the discrimination result to the user equipment 100.

In operation S330, the user equipment 100 may manage the communication model based on the response. Specifically, the user equipment 100 may wait for a downlink signal in the changed communication environment when a request to change the value of the target parameter is accepted, and may retransmit a request to change the value of the target parameter to base station 200 or send a request to change the value of another target parameter to the base station 200 when the request to change the value of the target parameter is not accepted.

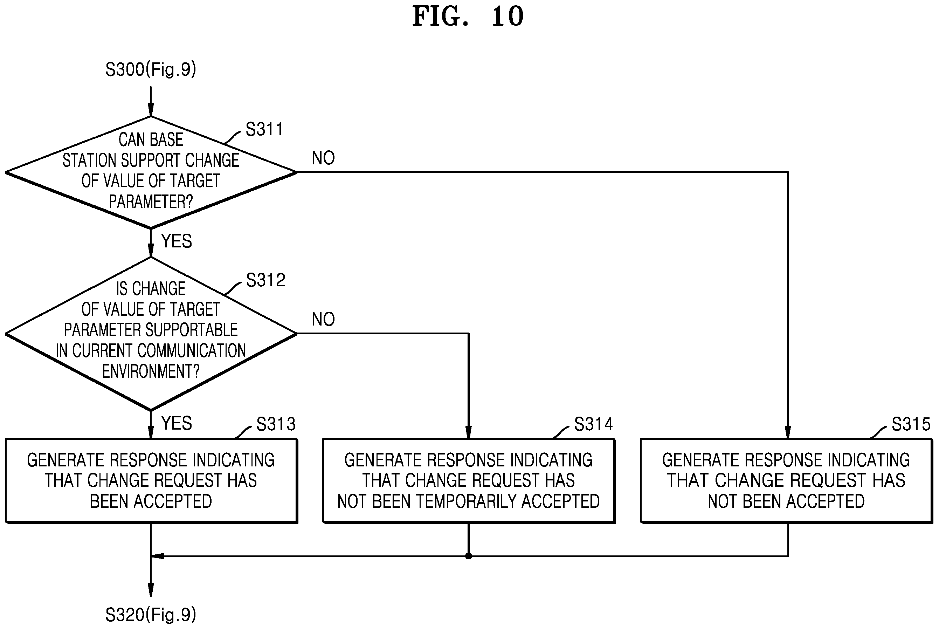

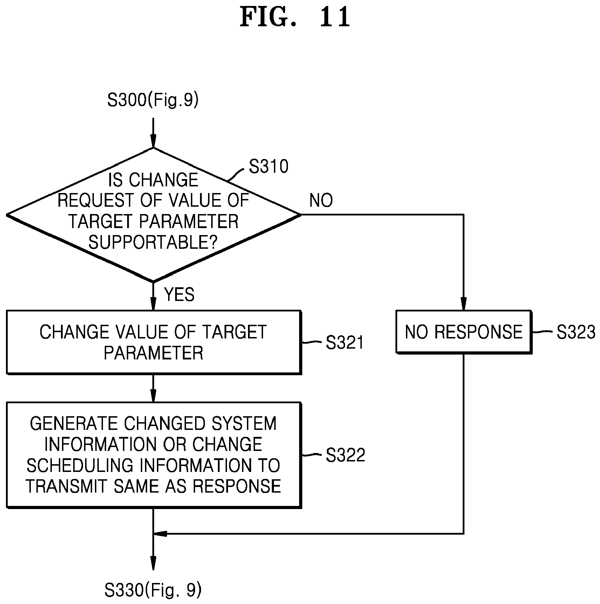

FIGS. 10 and 11 are flowcharts illustrating detailed embodiments of operation S300 of FIG. 9. Hereinafter, FIG. 9 may be further referred to help understanding.

Referring to FIG. 10, in operation S311, the base station 200 may determine whether the base station 200 may support a change in the value of the target parameter.

When operation S311 is "YES", the base station 200 may determine whether the target parameter may be changed in the current communication environment in subsequent operation S312.

When operation S312 is "YES", the base station 200 may generate a response indicating that the change request has been accepted. Based on the response, the user equipment 100 may wait for the downlink signal to be received in the changed communication environment due to the change in the value of the target parameter from the base station 200.

When operation S312 is "NO", the base station 200 may generate a response indicating that the change request has been temporarily rejected in subsequent operation S314. The user equipment 100 may retransmit a request to change the value of the target parameter to the base station 200 after a predetermined time elapsed based on the corresponding response.

When operation S311 is "NO", the base station may generate a response indicating that the change request has been rejected (e.g., or has not been accepted) in subsequent operation S315. The user equipment 100 may transmit a request to change the value of another target parameter to the base station 200 based on the corresponding response.

Referring further to FIG. 11, in operation S310, the base station 200 may determine whether a request for changing a value of a target parameter is acceptable.

When operation S310 is "YES", the base station 200 may change the value of the target parameter in subsequent operation S321.

In operation S322, the base station 200 may generate changed system information or changed scheduling information and transmit the same to the user equipment 100 as a response.

When operation S310 is "NO", the base station 200 may respond with no response in subsequent operation S323. The user equipment 100 may recognize that the request for changing the value of the target parameter has been rejected (e.g., has not been accepted) when the response is not received from the base station 200 for a predetermined time (e.g., based on the expiration of a time or timer that begins based at least in part on the sending of the request for changing the value of the target parameter).

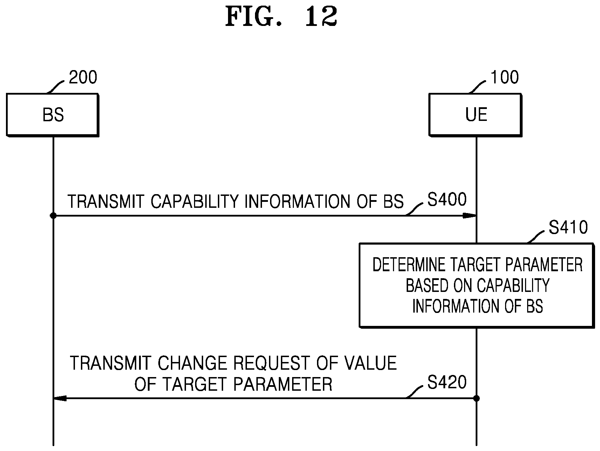

FIG. 12 is a flowchart illustrating an operation method of a wireless communication system according to an embodiment. The wireless communication system may include a user equipment 100 and a base station 200.

Referring to FIG. 12, in operation S400, the base station 200 may transmit capability information of the base station 200 to the user equipment 100. In an embodiment, the capability information of the base station 200 may indicate whether a feature of changing a value of a target parameter according to a request of the user equipment 100 is supportable. In addition, in an embodiment, the capability information of the base station 200 may further include information indicating parameters that may be changed in the base station 200 in response to a request from the user equipment 100 (e.g., in some cases, the capability information of the base station 200 may indicate second parameters, or certain parameters from the first parameters, that the base station 200 supports changing). In an embodiment, capability information of the base station 200 may be included in system information or scheduling information. In some embodiments, the capability information of the base station 200 may be information distinguished from system information or scheduling information, and a new format may be also applied thereto.

In operation S410, the user equipment 100 may determine a target parameter based on capability information of the base station 200. In an embodiment, the user equipment 100 may check whether the base station 200 supports the feature of changing the value of the target parameter according to the request of the user equipment 100 by referring to the capability information of the base station 200. In addition, in an embodiment, the user equipment 100 may determine a target parameter from among parameters that may be changed in the base station 200 by referring to the capability information of the base station 200.

In operation S420, the user equipment 100 may transmit, to the base station 200, a request to change a value of a target parameter.

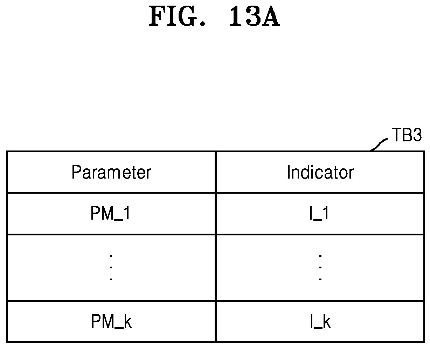

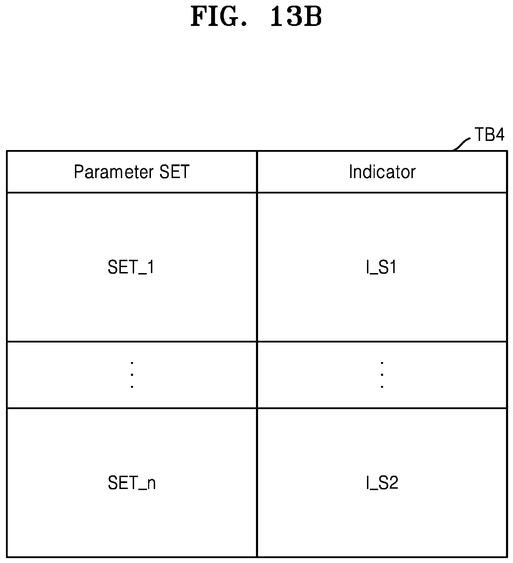

FIGS. 13A and 13B are table diagrams for explaining capability information of a base station indicating parameters that a base station may change in response to a request from a user equipment according to embodiments.

Referring to a third table TB3 of FIG. 13A, the capability information of the base station may include a field indicating a parameter and an indicator field indicating whether the parameter is changeable. In an embodiment, the capability information of the base station may include indicators I_1 to I_k for pointing to parameters that may be changed in the base station from among parameters PM_1 to PM_k that may be requested to change in the user equipment. For example, when the value I_1 of the first indicator corresponding to the first parameter PM_1 is a first value, it means that the base station may change the value of the first parameter PM_1, and when the value I_1 of the first indicator is a second value, it means that the base station may not change the value of the first parameter PM_1.

The user equipment may determine a target parameter from among parameters that may be changed in the base station based on the capability information of the base station such as the third table TB3.

Referring to a fourth table TB4 of FIG. 13B, the capability information of the base station may include a field indicating a parameter set and an indicator field indicating whether the parameter set is changeable. In an embodiment, the capability information of the base station may include indicators I_S1 to I_Sk for pointing to parameter sets that may be changed in the base station from among parameter sets SET_1 to SET_n that may be requested to change in the user equipment. For example, when the value I_S1 of the first indicator is the first value, it means that the base station may change the value of at least one of the parameters included in the first parameter set SET_1, and when the value I_S1 of the first indicator is the second value, it means that the base station may not change the values of all the parameters included in the first parameter set SET_1.

In an embodiment, the user equipment may select any one of the parameter sets that may be changed in the base station based on the capability information of the base station, such as the fourth table TB4, and determine the target parameter from among the parameters included in the selected parameter set. In some configurations, the user equipment may transmit, to the base station, a change request for any one of the parameter sets that may be changed in the base station based on the capability information of the base station, such as the fourth table TB4. The base station may change at least one value of parameters included in the corresponding parameter set in response to a change request for the parameter set. That is, the user equipment may request the base station to change the value in units of parameters or may request the base station to change the value in units of parameter sets.

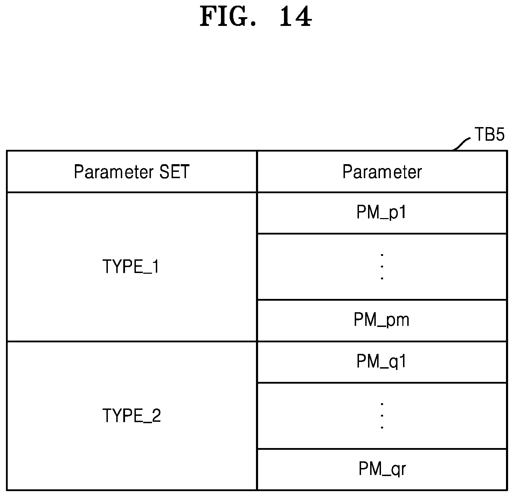

FIG. 14 is a table diagram for explaining an embodiment of user equipment that determines (e.g., distinguishes, discriminates, etc.) a change request condition for a specific parameter type according to an embodiment.

Referring to a fifth table TB5 of FIG. 14, parameters PM_p1 to PM_pm, ..., and PM_q1 to PM_qr may be classified into any one of a first parameter type TYPE_1 and a second parameter type TYPE_2. In the disclosure, the parameter type may be referred to as a type of a parameter, or a type.

In an embodiment, the first parameter type TYPE_1 may be a parameter type that individually controls a communication environment of a user equipment. As a specific example, parameters PM_p1~PM_pm of the first parameter type TYPE_1 may include one or more of: a PosSchedulinglnfo parameter, a BeamFailureRecoveryConfig parameter, a BeamFailureRecoveryRSConfig parameter, a BSR-Config parameter, a BWP-DownlinkCommon parameter, a BWP-DownlinkDedicated parameter, a BWP-UplinkCommona parameter, a BWP-UplinkDedicated parameter, a CandidateBeamRS parameter, a CellGroupConfig parameter, a CLI-RSSI-Range parameter, a DMRS-DownlinkConfig parameter, a DMRS-UplinkConfig parameter, a DRX-Config parameter, a DRX-ConfigSL parameter, a CodebookConfig parameter, a CSI-IM-Resource parameter, a CSI-MeasConfig parameter, a CSI-ResourceConfig parameter, a HighSpeedConfig parameter, a MeasConfig parameter, a PTRS-DownlinkConfig parameter, a PTRS-UplinkConfig parameter, a PUCCH-Config parameter, a PUCCH-PowerControl parameter, a PUSCH-Config parameter, a PUSCH-PowerControl parameter, a Q-OffsetRange parameter, a RACH-ConfigCommon parameter, a ReportConfigNR parameter, a ReportConfigNR-SL parameter, a RSRP-Range parameter, a RSRQ-Range parameter, a ServingCellConfig parameter, an SINR-Range parameter, an SRS-Config parameter, an SRS-RSRP-Range parameter, and an UplinkConfigCommon parameter (e.g., which may be included in RRC information), among other possible parameters of the first parameter type TYPE_1.

In an embodiment, the second parameter type TYPE_2 may be a parameter type that controls the communication environment of user equipment within the same coverage including the user equipment. As a specific example, parameters PM_q1-PM_qr of the second parameter type TYPE_2 may include one or more of: a dmrs-TypeA-Position parameter and a ssb-SubcarrierOffset parameter (e.g., which may be included in master information), a CellSelectionlnfo parameter and a ue-TimersAndConstants parameter (e.g., which may be included in SIB1), an intraFreqCellReselectionlnfo parameter and a relaxedMeasurement parameter (e.g., which may be included in SIB2), an IntraFreqNeighCelllnfo parameter (e.g., which may be included in SIB3), an InterFreqNeighCelllnfo parameter (e.g., which may be included in SIB4), a CarrierFreqEUTRA parameter and an EUTRA-FreqNeighCelllnfo parameter (e.g., which may be included in SIB5), an SL-ConfigCommonNR parameter (e.g., which may be included in SIB12), an sl-V2X-ConfigCommon parameter (e.g., which may be included in SIB13), a trs-ResourceSetConfig parameter and a TRS-ResourceSet parameter (e.g., which may be included in SIB17), a TN-NeighCellConfigList parameter (e.g., which may be included in SIB19), and an MCCH-Config parameter and an MCCH-RepetitionPeriodAndOffset parameter (e.g., which may be included in SIB20), among other possible parameters of the second parameter type TYPE_2.

In an embodiment, the user equipment may determine (e.g., distinguish, discriminate, etc.) which type of the target parameter is a first parameter type TYPE_1 and a second parameter type TTPE_2, and transmit a request for changing the value of the target parameter to the base station on the basis of the determination (e.g., based on the discrimination result).

Meanwhile, the parameter types TYPE_1 and TYPE_2 of FIG. 14 and parameters PM_p1 to PM_pm and PM_q1 to PM_qr included in each of the parameter types are merely embodiments, and thus, embodiments are not limited thereto, and more parameter types may be defined and various parameters may be included in each of the parameter types by analogy, without departing from the scope of the present disclosure.

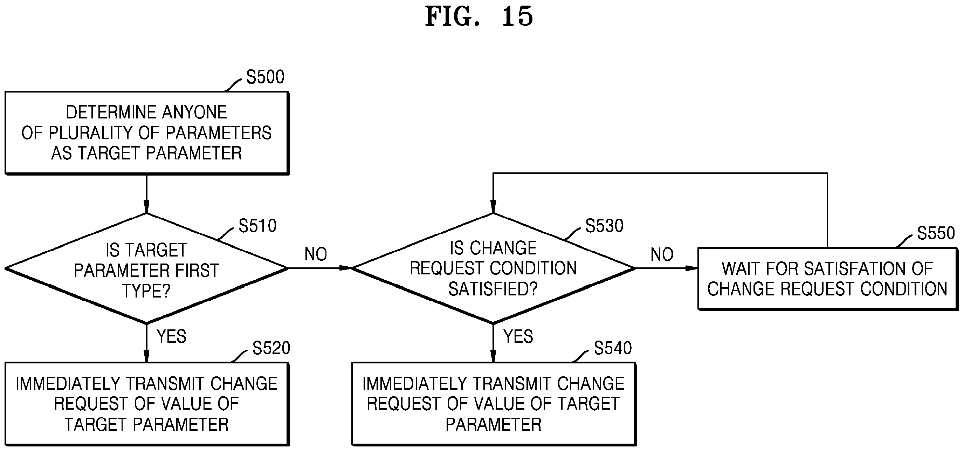

FIG. 15 is a flowchart illustrating an operation method of a user equipment associated with FIG. 14. Hereinafter, FIG. 14 may be further referred to help understanding.

Referring to FIG. 15, in operation S500, the user equipment may determine any one of a plurality of parameters as a target parameter.

In operation S510, the user equipment may determine whether the target parameter is the first type TYPE_1.

When operation S510 is "YES", the user equipment may immediately transmit, to the base station, a request to change the value of the target parameter in subsequent operation S520.

When operation S510 is "NO", the user equipment may determine that the target parameter is the second type TYPE_2 and determine whether the change request condition that meets the second type TYPE_2 is satisfied, in subsequent operation S530. In an embodiment, the change request condition may include at least one of a condition corresponding to a development-dedicated base station regarding a communication model by a base station communicating with a user equipment and a condition in which the total traffic of user equipments in the coverage of the base station is less than a threshold value. However, since this is only an embodiment, the change request condition may be set in various ways for each parameter type to minimize the impact on other user equipments by changing the value of the target parameter.

When operation S530 is "YES", the user equipment may immediately transmit, to the base station, a request to change the value of the target parameter in subsequent operation S540.

When operation S530 is "NO", the user equipment may wait for satisfaction of the change request condition in subsequent operation S550. In an embodiment, the user equipment may start a predetermined timer and perform operation S530 again when the predetermined timer expires. In some embodiments, the user equipment may determine other target parameters without transmitting a change request for the value of the target parameter to the base station when the change request conditions are not continuously satisfied a plurality of numbers of times as a result of repeatedly performing operation S530.

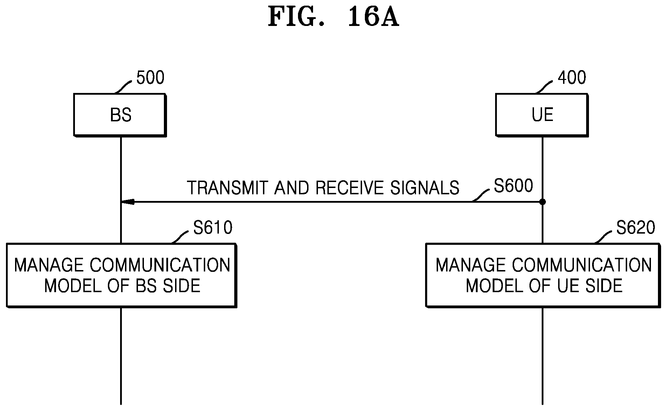

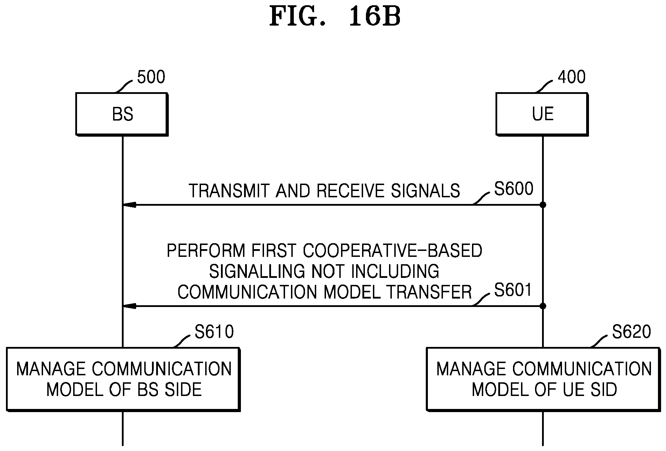

FIGS. 16A and 16B are flowcharts illustrating an operation method of a wireless communication system according to embodiments. The wireless communication system may include a user equipment 400 and a base station 500.

Referring to FIG. 16A, in operation S600, the user equipment 400 and the base station 500 may transmit and receive mutual signals.

In operation S610, the base station 500 may manage a communication model of the side of the base station 500 based on the transmitted and received signals. In an embodiment, the base station 500 may change the communication environment with the user equipment 400, collect various data, and manage the communication model on the side of the base station 500 using the collected data.

In operation S620, the user equipment 400 may manage a communication model of the side of the user equipment 400 based on the transmitted and received signals. The communication model management of the user equipment 400 side may be applied to embodiments of the present disclosure.

Referring further to FIG. 16B, in operation S600, the user equipment 400 and the base station 500 may transmit and receive mutual signals.

In operation S601, the user equipment 400 and the base station 500 may perform first cooperative-based signaling that does not include communication model transfer. In an embodiment, the first cooperative-based signaling may include an operation in which each of the user equipment 400 and the base station 500 transmits and receives requests, and responses or data to requests, to manage the communication model.

In operation S610, the base station 500 may manage a communication model on the side of the base station 500 based on the transmitted and received signals and the first cooperative-based signaling.

In operation S620, the user equipment 400 may manage a communication model on the side of the user equipment 400 based on the transmitted and received signals and the first cooperative-based signaling.

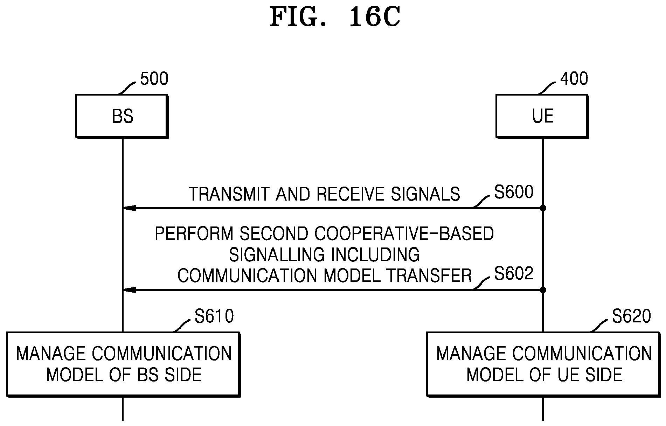

Referring further to FIG. 16C, in operation S600, the user equipment 400 and the base station 500 may transmit and receive mutual signals.

In operation S602, the user equipment 400 and the base station 500 may perform first cooperative-based signaling that includes communication model transfer. In an embodiment, the second cooperative-based signaling may include an operation in which each of the user equipment 400 and the base station 500 transmits and receives requests, and responses or data to requests, to manage the communication model, and may further include an operation of providing, to each other, information about the communication model managed by each of the user equipment 400 and the base station 500.

In operation S610, the base station 500 may manage a communication model on the side of the base station 500 based on the transmitted and received signals and the second cooperative-based signaling.

In operation S620, the user equipment 400 may manage a communication model on the side of the user equipment 400 based on the transmitted and received signals and the second cooperative-based signaling.

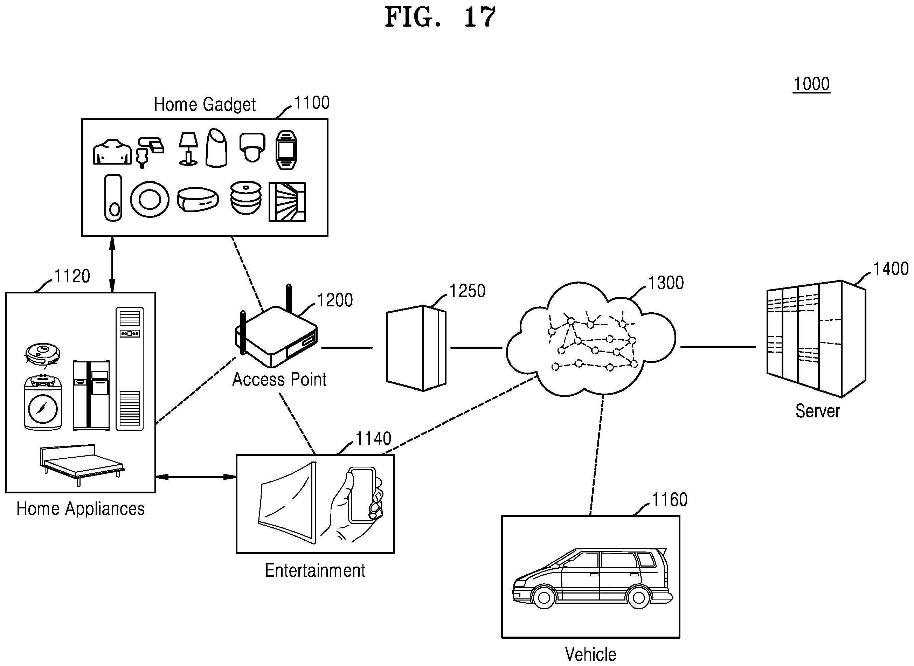

FIG. 17 is a conceptual diagram illustrating an loT network system 1000 to which embodiments of the inventive concept are applied.

Referring to FIG. 17, the loT network system 1000 may include a plurality of loT devices 1100, 1120, 1140, and 1160, an access point 1200, a gateway 1250, a wireless network 1300, and a server 1400. The loT may refer to a network between objects using wired/wireless communication.

Each of the loT devices 1100, 1120, 1140, and 1160 may form a group according to characteristics of each loT device. For example, loT devices may be grouped into a home gadget group 1100, a home appliance/furniture group 1120, an entertainment group 1140, a vehicle group 1160, or the like. A plurality of loT devices 1100, 1120, and 1140 may be connected to a communication network or may be connected to other loT devices through the access point 1200. The access point 1200 may be embedded in one loT device. The gateway 1250 may change a protocol to get the access point 1200 to gain access to an external wireless network. The loT devices 1100, 1120, and 1140 may be connected to an external communication network through the gateway 1250. The wireless network 1300 may include an Internet and/or a public network. A plurality of loT devices 1100, 1120, 1140, and 1160 may be connected to the server 1400 providing a predetermined service through the wireless network 1300, and a user may use the service through at least one of the loT devices 1100, 1120, 1140, and 1160.

According to embodiments of the present disclosure, a plurality of loT devices 1100, 1120, 1140, and 1160 actively transmit a request for changing a value of a target parameter to an loT device for controlling a communication environment. The loT device may change the value of the target parameter in response to the change request, and then transmit a signal including data desired by the plurality of loT devices 1100, 1120, 1140, and 1160 to the plurality of loT devices 1100, 1120, 1140, and 1160. In this way, the plurality of loT devices 1100, 1120, 1140, and 1160 may actively collect desired data and optimally manage a communication model based on the collected data.

While the inventive concept has been particularly shown and described with reference to embodiments thereof, it will be understood that various changes in form and details may be made therein without departing from the scope of the following claims.

## Claims

1. A method of wireless communication by a user equipment comprising:
receiving system information and scheduling information from a base station;
receiving a first downlink signal from the base station based at least in part on the system information and the scheduling information;
managing a communication model based on a machine learning operation using data included in the first downlink signal; and
transmitting, to the base station, a change request for changing a value of a target parameter, from among a first plurality of parameters corresponding to at least one of: the system information and the scheduling information, based on the managing of the communication model.

2. The method of claim 1, wherein:
receiving the system information comprises receiving at least one of: a master information block (MIB) including the system information and a system information block (SIB) including the system information, and
the scheduling information comprises at least one of: downlink control information (DCI) and radio resource control (RRC) connected state information.

3. The method of claim 1 or 2, wherein the change request includes a desired change value corresponding to the target parameter.

4. The method of claim 1, 2, or 3, further comprising:
receiving an acceptance response to the change request from the base station; and
transmitting, to the base station, a desired change value corresponding to the target parameter based on the received acceptance response.

5. The method of any one of claims 1 to 4, further comprising:
receiving an indication of a change value from the base station in response to the transmitted change request, wherein the change value for the target parameter is determined by the base station.

6. The method of any one of claims 1 to 5, further comprising:
receiving, from the base station, capability information indicating whether a feature of changing the value of the target parameter is supportable, wherein the change request is transmitted based on the received capability information.

7. The method of claim 6, wherein the capability information comprises an indication that the feature is supportable for one or more second parameters, and the first plurality of parameters correspond to the one or more second parameters, and/ or, wherein the capability information comprises an indication that the feature is supported for one or more parameter sets, and the first plurality of parameters correspond to the one or more parameter sets.

8. The method of any one of claims 1 to 7, further comprising:
identifying a type of the target parameter as a first type or a second type;
determining whether a change request condition is satisfied based on whether the type of the target parameter is first type or the second type; and
determining whether to transmit the change request based on whether the change request condition is satisfied.

9. The method of claim 8, wherein when the target parameter is the first type, the target parameter configures a communication environment of the user equipment.

10. The method of claim 8 or 9, wherein when the target parameter is the second type, the target parameter configures a communication environment of one or more other user equipments within a same coverage area as the user equipment.

11. The method of claim 8, 9 or 10, wherein the change request condition comprises at least one of: a first condition in which the base station is dedicated to development of the communication model and a second condition in which total traffic of one or more user equipments within a coverage area of the base station is less than a threshold value.

12. The method of any one of claims 8 to 11, wherein determining whether to transmit the change request comprises:
starting a timer prior to the change request condition being satisfied;
determining whether the change request condition is satisfied based on expiration of the timer; and
determining whether to transmit the change request based on the determination of whether the change request condition is satisfied based on the expiration of the timer.

13. The method of any one of claims 1 to 12, further comprising:
receiving, from the base station, at least one of: second system information changed by an updated target parameter and second scheduling information changed by the updated target parameter;
receiving a second downlink signal from the base station based at least in part on the at least one of: the second system information and the second scheduling information; and
managing the communication model based on a second machine learning operation using data included in the second downlink signal.

14. The method of any one of claims 1 to 13, wherein the first plurality of parameters comprises at least one of: a physical layer parameter, a mobility management parameter, a beam management parameter, and a low-power performance parameter.

15. A user equipment including a transceiver configured to:
receive system information and scheduling information from a base station;
receive a first downlink signal from the base station based at least in part on the system information and the scheduling information;
manage a communication model based on a machine learning operation using data included in the first downlink signal; and
transmit, to the base station, a change request for changing a value of a target parameter, from among a first plurality of parameters corresponding to at least one of: the system information and the scheduling information, based on the managing of the communication model.
